# EUROPÄISCHE PATENTSCHRIFT

(11) **EP 0 933 251 B1**
(45) Veröffentlichungstag und Bekanntmachung des Hinweises auf die Patenterteilung: **26.10.2005**
(21) Anmeldenummer: 99101384.8
(22) Anmeldetag: 26.01.1999
(51) Int. Cl.: B60P 3/42

(54) **Transportfahrzeug insbesondere für Bier- und Brauereiindustrie**
Transport vehicle, particularly for the brewing industry
Véhicule de transport, particulièrement pour l'industrie de la bière et de la brasserie

(30) Priorität: 28.01.1998 DE 29801370 U
(43) Veröffentlichungstag der Anmeldung: 04.08.1999
(73) Patentinhaber: Torwesten Spedition GmbH & Co. KG, 45257 Essen (DE)
(72) Erfinder: Torwesten, Heinrich, 45257 Essen (DE); Meinhardt, Reinhold, 45279 Essen (DE); Torwesten, Dirk, 45257 Essen (DE)
(74) Vertreter: Hennicke, Ernst Rüdiger

(56) Entgegenhaltungen:
- EP-A- 0 101 537
- EP-A- 0 192 559
- EP-A- 0 763 459
- DE-A- 4 309 491
- DE-U- 1 918 090
- DE-U- 29 503 206
- FR-A- 1 601 445
- GB-A- 2 298 830
- NL-C- 1 001 836
- US-A- 2 959 316

## Beschreibung

Die Erfindung betrifft ein Transportfahrzeug für die Bier- und Brauereiindustrie nach dem Oberbegriff des Anspruchs 1. Die Erfindung geht zwar von Transportfahrzeugen für diesen Industriezweig aus, ist aber auch für andere mit insbesondere kohlensäurehaltigen Getränken befasste Industriezweige einsetzbar.

Unter Fahrzeug sollen vor allem die sogenannten Sattelauflieger (und Gliederzüge) verstanden werden, die von separaten Zugmaschinen gezogen werden. In Abhängigkeit von der Anzahl der Radachsen der Zugmaschine haben solche Auflieger 2 bis 6 Achsen. Das die maximale Zuladung beschränkende Höchstgewicht für solche Fahrzeuge liegt in Deutschland bei 40 Tonnen.

Gattungsgemässe Fahrzeuge, vielfach auch Planauflieger genannt werden von nahezu allen Speditionsfirmen zum Transport von Gütern aller Art verwendet. In der Bier- und Brauereiindustrie wird beispielsweise Bier in verschiedenen Gebinden wie Bierfässer, Bierdosen und Bierkästen einzeln oder palettenweise zwischen Brauereien, Abfüllstationen, Reinigungsfirmen für die jeweiligen Gebinde sowie dem Gross- und Einzelhandel hin- und hertransportiert. Hierzu weisen die Fahrzeuge einen Laderaum auf, dessen untere Begrenzungsfläche ein Ladeboden bildet auf dem wiederum die zu transportierenden vollen oder leeren Gebinde für den Transport abgestellt werden. Der Laderaum wird mittels Aufbauten und einer Plane bzw. festen Begrenzungswänden geschlossen, so dass die Ladung während der Fahrt geschützt ist. Für die Zuladung von Bierpaletten in Normgrösse darf der Laderaum eine Mindesthöhe von 1,60 m nicht unterschreiten. Die maximale Höhe der Fahrzeuge, die nicht überschritten werden darf, beträgt 4 m.

Für eine zunehmende Anzahl von Brauereien ist es heute nicht mehr wirtschaftlich, eigene Abfüllanlagen zu betreiben. Daher sind an einigen zentralen Stellen in Deutschland und Europa Abfüllzentren entstanden, an denen das Bier in nahezu jede Gebindegrösse abgefüllt werden kann. Für den Transport des Bieres zu diesen Abfüllzentren werden Spezialfahrzeuge eingesetzt nämlich spezielle Tankauflieger mit aufmontierten, sich über nahezu die gesamte Aufliegerlänge erstreckenden Biertransporttanks, die nur für den Transport von "losem" Bier geeignet sind. Da jeglicher Kontakt des Bieres mit Sauerstoff für seine Qualität schädlich wäre, werden für den Transport insbesondere Drucktanks verwendet in denen vor und nach dem Befüllen eine CO2-Atmosphäre herrscht. Auch das Entleeren der Tanks geschieht unter Einsatz von Kohlensäure. Die Drucktanks sind normalerweise in Röhrenform mit kreisrundem Durchmesser und vom und hinten aufgesetzten sogenannten Tankböden gebildet haben ein Mindestfassungsvermögen von 5000 Litern und sind bei einem Prüfdruck von 4 bar druckbeständig. Ein Mindestüberdruck von 0,9 bar für die Definition als Drucktank ist gesetzlich festgelegt. Bei einem Durchmesser von etwa 2 m und einer Tanklastzuglänge von etwa 12,5 m können in einem Biertransporttank ca. 27.000 Liter Bier befördert werden.

Aus der FR 1 601 445 B 1 ist ein Transportfahrzeug gemäß dem Oberbegriff des Anspruchs 1 bekannt, nämlich ein Lastkraflwagen mit flacher Pritsche zum Transport von unverpackten Flüssigkeiten bekannt, der eine Transportplattform aufweist, auf der sich ein einzelner, kastenförmiger Kunststofftank aus Fiberglas abstützt, der mittels einer Hebeeinrichtung relativ zur Plattform anhebbar ist, damit in einem Laderaum zwischen dem angehobenen Tank und der Plattform Stückgut transportiert werden kann, wenn der Tank leer und angehoben ist. Die Hebeeinrichtung umfaßt einen handbetätigten Wickler mit Kurbel und Seiten, die an der flachen Oberseite des Tanks angreifen und über Umlenkrollen mit dem Wickler verbunden sind.

Aus der EP 192 559 A1 ist ein Fahrzeug bekannt, das für den Transport einerseits von Flüssigkeiten und andererseits von Paletten oder Container für Feststoffe umrüstbar ist. Das Fahrzeug weist mehrere, hintereinander angeordnete, abgeteilte Behälterteile und einen Boden auf, zu dessen Seiten vertikale Ständer ausgebildet sind, in denen Rohre nach Art von Führungsstangen geführt sind. Jeweils zwei Rohre zu beiden Seiten eines Behälterteils sind derart mit einem Behälterteil verbunden, daß jeder einzelne Behälterteil unabhängig vom anderen Behälterteil über vier Rohre vertikalbeweglich geführt ist und mittels einer ein Seil und eine Winde umfassenden Hebeeinrichtung angehoben werden kann, um auf dem Boden Paletten oder Container abstellen zu können

Aus der GB 2 298 830 A1 ist ein Transportfahrzeug bekannt, bei welchem in einem unteren Teil zwei nebeneinanderliegende, kreiszylinderftirmige Tanks innerhalb eines Gestells angeordnet sind. Das Gestell bildet die Stützkonstruktion für eine an der Oberseite des Gestells befestigte, so daß oberhalb der Tanks ein Laderaum ausgebildet ist, in welchem palletierte Ware abgestellt und mit dem Fahrzeug transportiert werden kann. Die sich über die Länge des Fahrzeugs erstreckenden Tanks sollen zugleich den Längsstützträger für das Fahrzeug bilden.

Der Transport losen Bieres in Transporttanks wird heutzutage nur von einer geringen Anzahl von Speditionsfirmen durchgeführt, da das notwendige Know-how und die Investitionen in Spezialfahrzeuge einen Zugang zu diesem Bereich der Speditionsbranche erheblich erschweren. Ein wirtschaftlicher Nachteil ist weiterhin, dass mit den Spezialfahrzeugen wegen der durch die Drucktanks bedingten räumlichen Knappheit nur eine Fahrt in beladenem Zustand durchgeführt werden kann, während die andere Fahrt eine reine Leerfahrt ist, auf der keine Güter transportiert werden können.

Aufgabe der Erfindung ist es, ein Fahrzeug für den Bier- und Getränketransport zu schaffen, mit dem die Anzahl von Leerfahrten, die sowohl umwelt- als auch verkehrspolitische Nachteile haben, möglichst gering gehalten werden kann, so dass Speditionsfirmen für den Bier- und Getränketransport aufgrund der höheren Auslastung während der insgesamt zurückgelegten Kilometer wirtschaftlicher kalkulieren können.

Diese Aufgabe wird durch die in Anspruch 1 angegebene Erfindung gelöst. Erfindungsgemäss sind innerhalb des Laderaums zwei als Drucktanks ausgebildete Transporttanks vorgesehen, die innerhalb eines Rahmengestells angeordnet und derart miteinander verbunden sind, dass sie eine Einheit bilden. Erfindungsgemäss ist weiter vorgesehen, dass sich die Drucktanks nahezu über die gesamte Fahrzeuglänge erstrecken und zusammen mit dem Rahmengestell mittels einer Hebeeinrichtung wahlweise anhebbar oder absenkbar ist. Mit der Hebeeinrichtung sind das Rahmengestell und die Tanks, insbesondere in leerem Zustand, wahlweise anhebbar und absenkbar. Bei Fahrten mit leeren (und somit leichten) Transporttanks können diese dann angehoben werden, so dass die vollen und mithin schweren Gebindepaletten auf dem Ladeboden abgestellt werden können und hierdurch gleichzeitig der Schwerpunkt des Fahrzeugs im Vergleich zu Fahrzeugen ohne die Hebeeinrichtung relativ tief liegt, also auch kaum eine Beeinträchtigung der Fahreigenschaften des erfindungsgemässen Fahrzeugs auftritt. Da unterhalb der Tanks ein Ladeboden ausgebildet ist, können nunmehr beide Transportarten, also sowohl der Transport von "losem" Bier oder anderen Flüssigkeiten in einem Tank als auch der Transport von vollen oder leeren Gebinden des abgefüllten Bieres oder Getränkes, mit ein und demselben Fahrzeug durchgeführt werden. Die Palettenware wird hierzu auf den unterhalb des Tanks befindlichen Ladeboden abgestellt. Mit den erfindungsgemässen Fahrzeugen kann nunmehr ein einziger Spediteur einen in sich geschlossenen Transportablauf des losen und abgefüllten Bieres (Getränkes) übernehmen, so dass auch der verwaltungs- und planungstechnische Aufwand erheblich reduziert ist. Beide kreiszylinderförmigen Drucktanks können dann z.B. ein Fassungsvermögen von jeweils ca. 12.000 Litern aufweisen, so dass die insgesamt zuladbare Menge von 24.000 Liter Bier im Vergleich zu herkömmlichen Biertransport-Tankfahrzeugen zwar um einiges geringer ist, als Ausgleich dafür aber eine bei einer vorteilhaften Ausgestaltung oberhalb des Gestells ausgebildete Ladefläche mit anderen Gütern, z.B. mit Leergut, beladen werden kann. Der Durchmesser solcher Tanks kann z.B. 0,9 m bis 1,3 m betragen, so dass die gewünschte Mindesthöhe von 1,60 m für die auf die Ladefläche aufzuladenden Paletten eingehalten werden kann.

Die Tanks können auf einfache Weise, z.B. mittels herkömmlicher Container- oder Gestellverriegelungen, am Fahrzeugrahmen arretierbar sein. Das erfindungsgemässe Transportfahrzeug erhält einen besonders einfachen Aufbau, wenn das Rahmengestell im wesentlichen quaderförmig ist. Oberhalb des Rahmengestells kann sich auch eine Ladefläche abstützen. In einigen Fällen kann es wünschenswert sein, die Tanks für Sondereinsätze der Fahrzeuge ausbauen zu können, um so nahezu das volle Ladevolumen herkömmlicher Planauflieger zu erhalten. Das Rahmengestell bzw. die Tanks sind daher vorzugsweise demontierbar an dem Fahrzeugrahmen des Fahrgestells befestigt. Hierbei ist dann von Vorteil, wenn sich an dem Fahrgestell bzw. Fahrzeug-rahmen der (untere) Ladeboden abstützt, so dass entweder der gegebenenfalls vorhandene Zwischenraum zwischen Ladeboden und Ladefläche separat beladen wird oder die (obere) Ladefläche demontiert wird, um einen möglichst grossen Laderaum zu schaffen.

Um die Tanks alleine oder mitsamt Rahmengestell gegebenenfalls ausbauen zu können, kann das Rahmengestell im wesentlichen rechteckförmige Taschen für den Eingriff von Gabelstaplerarmen aufweisen oder an den Tanks sind Anbauten mit entsprechenden Taschen angeordnet. Wenn diese Taschen symmetrisch zum Schwerpunkt auf einer der Längsseiten angeordnet sind, reicht ein Gabelstapler zum seitlichen Herausheben des Rahmengestells aus. Alternativ oder zusätzlich kann das Rahmengestell bzw. die Tanks klapp- oder ausziehbare Stützftisse bzw. Aussparungen zur Aufnahme separater Stützfüsse aufweisen, so dass die Tanks einerseits zwischenlagerbar sind, ohne direkt auf dem Boden zu stehen, andererseits auch ohne Gabelstapler entladen werden können.

Die Hebevorrichtung kann ein Zugmittel oder einen Spindeltrieb aufweisen und elektrisch, hydraulisch oder pneumatisch betätigbar sein. Für letztere Antriebsarten kann ein Nebenaggregat an der Zugmaschine für die hydraulische oder pneumatische Versorgung Anwendung finden.

Bei den vorgenannten Ausführungsformen kann es weiterhin für die Erzielung einer maximalen Höhe des Laderaumes von Vorteil sein, wenn das Fahrgestell im Vergleich zu herkömmlichen Fahrzeugen tiefergelegt ist und/oder an den Radachsen Reifen mit geringerem Durchmesser montiert sind.

Die Transporttanks werden von Drucktanks gebildet. Die Anschlüsse zum Befüllen und Entleeren des/der Tank/s sowie zum Einleiten von Reinigungsmitteln können am hinteren Fahrzeugende, vorzugsweise in einem Schrank, vorgesehenen sein, wo sie gegen Verschmutzung während der Fahrt geschützt sind. Weiterhin wird bevorzugt, dass die Tanks als Reinigungseinrichtung an der Tankoberseite im Tankinnenraum Lanzen mit Sprühköpfen zum Einleiten und Verteilen von Reinigungsmitteln aufweisen. Die Reinigung der Tanks nach einer Fahrt kann dann erfolgen, ohne dass die Tanks demontiert werden müssen.

Weitere Vorteile der Erfindung ergeben sich aus der nachfolgenden Beschreibung der zugehörigen Zeichnung, in der ein bevorzugtes Ausführungsbeispiel für ein erfindungsgemässes Transportfahrzeug dargestellt ist. Die Beschreibung der nur zur Illustration dienenden schematischen Zeichnung erfolgt für ein Fahrzeug, das in der Bier- und Brauereiindustrie als bevorzugtes Anwendungsgebiet Verwendung finden soll. Das Transportfahrzeug und insbesondere die Tanks können aber für andere in Drucktanks transportierbare Getränkeflüssigkeiten, z.B. kohlensäurehaltige Getränke, Wein, Milch etc. eingesetzt werden.

In der Zeichnung zeigt:

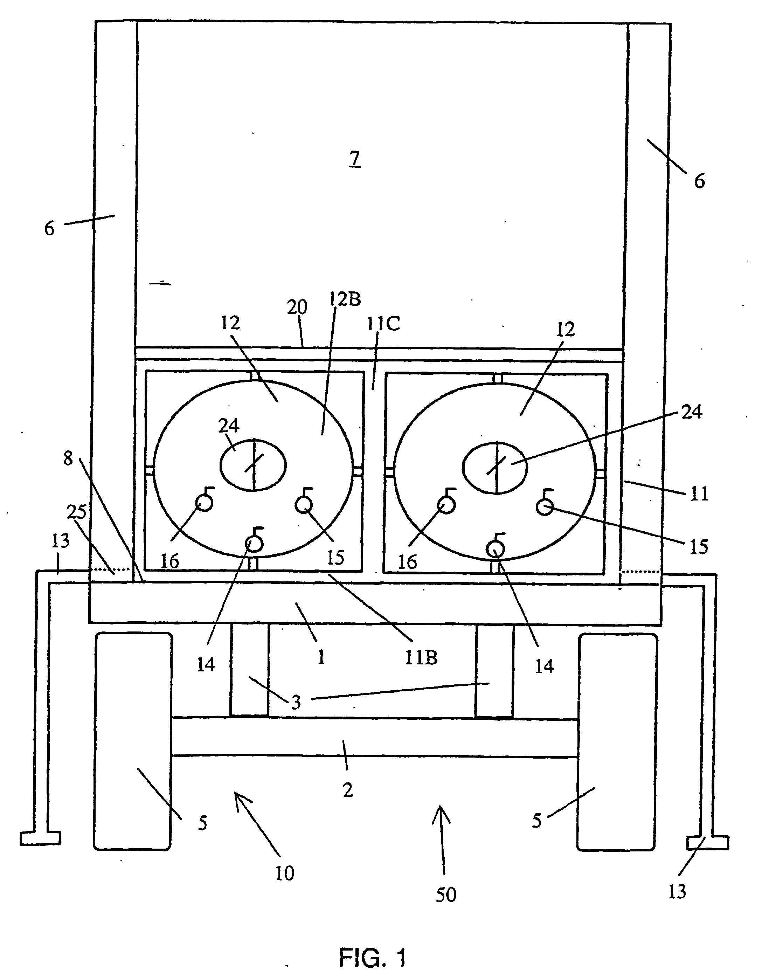

**Fig. 1** schematisch eine Rückansicht eines erfindungsgemässen Transportfahrzeugs mit zwei nebeneinanderliegenden Drucktanks, und
**Fig. 2** schematisch eine Seitenansicht des Fahrzeugs aus Figur 1.

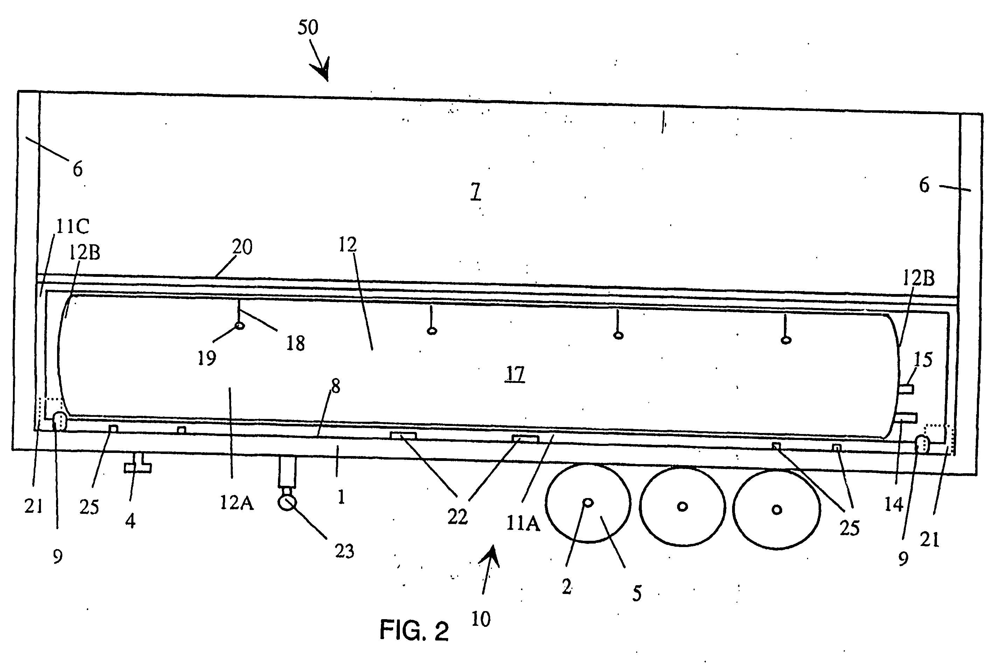

Das insgesamt mit 50 bezeichnete Fahrzeug hat einen kastenförmigen Aufbau mit rechteckförmiger Grundfläche und ist von aussen von einem herkömmlichen Plansattelauflieger nicht zu unterscheiden. Vom insgesamt mit 10 bezeichneten Fahrgestell sind der Fahrzeugrahmen 1, Radachsen 2 und eine Achsaufhängung 3 dargestellt. Das Fahrzeug hat, wie aus Figur 2 ersichtlich ist, insgesamt drei Achsen 2 und kann mittels des am Fahrzeugrahmen 1 montierten Königszapfens 4 von einer nicht gezeigten Zugmaschine gezogen werden. Auf jeder Achse 2 sitzen mindestens zwei Räder 5. Vier jeweils an den Ecken des im wesentlichen rechteckförmigen Fahrzeugrahmens 1 montierte Rahmenstützen 6 bilden die Eckpfeiler eines selbsttragenden Aufbaus, an dem eine Plane oder feste Begrenzungswände (nicht gezeigt) befestigt werden können. Die Rahmenstützen 6 begrenzen zusammen mit der Plane oder den Begrenzungswänden den Laderaum 7. Ein drehbares und z.B. mittels eines Kurbeltriebs ausfahrbares Stützrad 23 dient dazu, das Fahrzeug 50 ohne Zugmaschine und ohne Beschädigung des Königszapfens 4 auf einem Hof abstellen zu können

An dem Fahrzeugrahmen 1 stützt sich ein unterer Ladeboden 8 ab. Auf diesem Ladeboden 8 wiederum ist mittels herkömmlicher, z.B. mit einem Verriegelungsbolzen versehener Containerverriegelungen 9 (Figur 2) ein Rahmengestell 11 lösbar befestigt. Das Rahmengestell 11 ist derart aus Längsprofilen 11A, Querprofilen 11B und vertikalen Verbindungsprofilen 11C zusammengesetzt, daß das Rahmengestell 11 zwei langgestreckte Kammern zur stabilen Aufnahme zweier röhrenförmigen Drucktanks 12 bildet. Das Rahmengestell 11 und die Drucktanks 12 erstrecken sich nahezu über die gesamte Fahrzeuglänge. Die Versteifung des Rahmengestells 11 mittels der Profile 11 A, 11B, 11C sorgt dafür, daß das Rahmengestell 11 zumindest das Eigengewicht der Drucktanks 12 auch ohne nennenswerte Verbiegungen tragen kann, wenn das Rahmengestell mittels Stützen 13 außerhalb des Fahrzeugs 50 aufgestellt wird. Die Stützen 13 können hierzu in Aussparungen 25 eingesteckt werden, die in die unteren, außenliegenden Längsprofile 11 A integriert sind.

An der Oberseite des Rahmengestells 11 stützt sich eine Ladefläche 20 ab, die bei montiertem Rahmengestell den Ersatzboden für den Laderaum 7 bildet und auf dem die nicht gezeigten, meist palettenweise beförderten Bierkästen und Bierdosen abgestellt werden können. Es versteht sich, daß die Versteifung des Rahmengestells 11 für diesen Anwendungsfall derart ausgelegt ist, daß es auch das im Laderaum 7 zuladbare Gewicht ohne Verbiegung abstützen kann. Der große Vorteil dieser Ausführungsform ist, daß keine zusätzlichen Abstützungen für die Ladefläche 20 benötigt werden.

Die Drucktanks 12 sind jeweils aus einem im wesentlichen kreiszylinderförmigen Längskörper 12A gebildet, der an den Enden mittels gerundeter Tankböden 12B geschlossen ist. Der hintere Tankboden 12B weist eine als Mannloch dienende, verschließbare Öffnung 24 sowie einen Anschlußstutzen 14 für eine Leitung zum Befüllen bzw. Entleeren des Drucktanks 12 mit Bier auf. Weiterhin ist sowohl ein Anschluß 15 für eine CO₂-Leitung vorhanden, um den Innenraum 17 des Drucktanks 12 mit einer CO₂-Atmosphäre vorspannen zu können, als auch ein Anschluß 16 für eine Reinigungsleitung vorhanden, um den Tankinnenraum 17 nach jeder Fahrt chemisch reinigen zu können. Für den Reinigungsprozeß sind im Tankinnenraum 17 an der Tankoberseite Lanzen 18 mit schematisch gezeigten Sprühköpfen 19 befestigt, die über nicht gezeigte Kanäle mit dem Anschluß 16 verbunden sind. Die Anschlüsse 14, 15, 16 können über Verbindungsleitungen in einen nicht gezeigten, am hinteren Fahrzeugende angebrachten Schrankkasten hineingeführt sein, damit die Anschlüsse während der Fahrt bzw. dem Beladen/Entladen des Fahrzeugs nicht verschmutzen.

Die Drucktanks 12 sind samt Rahmengestell 11 aus dem Fahrzeug 50 herausnehmbar. Die Containerverriegelungen 9 brauchen hierzu nur geöffnet zu werden. Anschließend kann das Rahmengestell 11 seitlich oder nach hinten aus dem Fahrzeug herausgenommen werden. Zum seitlichen Herausnehmen sind in die unteren Längsprofile 11 A des Rahmengestel ls 11 jeweils zwei Taschen 22 zueinander fluchtend integriert, in die Gabelstaplerarme (nicht gezeigt), das gesamte Rahmengestell 11 durchgreifend, eingreifen können. Falls kein Gabelstapler vorhanden ist, kann das Rahmengestell 11 auch mittels der Stützen 13 und der insgesamt acht vorhandenen Aussparungen schrittweise nach hinten herausgenommen werden. Hierzu wird zuerst das Fahrzeug 50 über die nicht gezeigte Federung leicht angehoben, und in die vorderen der hinteren beiden Aussparungen 25 sowie in die vordersten Aussparungen 25 werden je zwei Stützen hineingesteckt. Anschließend wird das Fahrzeug 50 so weit abgesenkt daß das Rahmengestell 11 von der Ladefläche 8 abgehoben ist. Das Fahrzeug 50 wird dann soweit nach vorne bewegt, daß sich die hintere Rahmenstütze 6 zwischen den beiden hinteren Aussparungen 25 befindet. Anschließend wird das Fahrzeug wieder angehoben und in die hintersten Aussparungen 25, die sich dann außerhalb des Fahrzeugrahmens befinden, werden die Stützen 13 eingesetzt. Nach erneutem Absenken und Vorwärtsbewegen wird die gleiche Prozedur bei den vorderen Aussparungen 25 wiederholt bis daß sich das Rahmengestell 11 mit den Tanks 12 vollständig außerhalb des Fahrzeugs 50 befindet.

Bei der bevorzugten Ausführungsform ist auch eine Hebevorrichtung vorhanden, von der in der Figur 2 schematisch nur ein Antriebsmotor 21 dargestellt ist. Die von dem Antriebsmotor z.B. betätigten Zugmittel können in die Rahmenstützen 6 integriert sein. Mit der Hebevorrichtung wird das Rahmengestell 11 samt Tanks 12, wenn diese z.B. für die Rückfahrt von der Abfüllstation zur Brauerei leer sind, nach oben gezogen, so daß die Paletten auf dem unteren Ladeboden 8 abgestellt werden können. Da sich das schwerere Gewicht der beladenen Paletten dann unterhalb der Tanks 12 befindet, liegt der Schwerpunkt des Fahrzeugs insgesamt relativ tief. Die Hebevorrichtung kann sich auch an einer anderen Stelle des Fahrzeugs befinden. Zwei oder mehr Hubzylindern beispielsweise könnten auch in etwa auf der Längsachse des Fahrzeugs, im wesentlichen nahe des Schwerpunktes der Tank/Rahmenkonstruktion angeordnet sein.

## Patentansprüche

1. Transportfahrzeug für die Bier-, Brauerei- und Getränkeindustrie, mit einem wenigstens zwei Radachsen (2) und einen Fahrzeugrahmen (1) umfassenden Fahrgestell (10) sowie einem Laderaum (7), wobei an dem Fahrzeugrahmen (1) ein Ladeboden (8) montiert ist und sich an dem Fahrzeugrahmen (1) innerhalb des Laderaums (7) mindestens ein rohrförmiger, sich nahezu über die gesamte Fahrzeuglänge erstreckender, geschlossener Transporttank abstützt, der mittels einer Hebeeinrichtung wahlweise anhebbar oder absenkbar ist und unterhalb dessen der Ladeboden (8) ausgebildet ist, **dadurch gekennzeichnet, daß** sich an dem Fahrzeugrahmen (1) zwei nebeneinanderliegende, im wesentlichen kreiszylinderförmige Drucktanks (12) als Transporttanks abstützen, die in einem Rahmengestell (11) angeordnet sind, das samt Drucktanks mittels der Hebeeinrichtung wahlweise anhebbar oder absenkbar ist.

2. Transportfahrzeug nach Anspruch 1, **dadurch gekennzeichnet, daß** das Rahmengestell (11) demontierbar an dem Fahrzeugrahmen (1) befestigt ist.

3. Transportfahrzeug nach Anspruch 1 oder 2, **dadurch gekennzeichnet, dass** oberhalb der Transporttanks eine Ladefläche (20) ausgebildet ist, die sich an dem Rahmengestell (11) abstützt.

4. Transportfahrzeug nach einem der Ansprüche 1 bis 3, **dadurch gekennzeichnet, dass** das Rahmengestell (11) oder Anbauten am Tank im wesentlichen rechteckfdnnige Taschen (22) für den Eingriff von Gabelstaplerarmen aufweisen.

5. Transportfahrzeug nach einem der Ansprüche 1 bis 4, **dadurch gekennzeichnet, dass** das Rahmengestell klapp- oder ausziehbare Stützfiisse und/oder Aussparungen (25) zur Aufnahme von Stützfüssen (13) aufweist.

6. Transportfahrzeug nach einem der Ansprüche 1 bis 5, **dadurch gekennzeichnet, dass** die Hebeeinrichtung wenigstens ein mittels eines Motors (21) betätigbares Zugmittel oder einen Spindeltrieb aufweist.

7. Transportfahrzeug nach einem der Ansprüche 1 bis 6, **dadurch gekennzeichnet, dass** die Hebeeinrichtung mittels eines Hydraulik- oder Pneumatikantriebs betätigbar ist, wobei die Antriebseinheit für den Hydraulik- oder Pneumatikantrieb vorzugsweise ein Nebenaggregat an der Zugmaschine ist.

8. Transportfahrzeug nach einem der Ansprüche 1 bis 7, **dadurch gekennzeichnet, dass** das Fahrgestell (1) im Vergleich zu herkömmlichen Fahrzeugen tiefergelegt ist und/oder an den Radachsen Reifen mit geringerem Durchmesser montiert sind.

9. Transportfahrzeug nach einem der Ansprüche 1 bis 8, **dadurch gekennzeichnet, dass** die Transport-Drucktanks zum Transport von Bier, kohlensäurehaltigen Flüssigkeiten oder anderen Getränken geeignet sind und der Ladeboden (8) bzw. die Ladefläche (20) zum Transport palettierter Ware geeignet sind.

10. Transportfahrzeug nach Anspruch 9, **dadurch gekennzeichnet, dass** ein Anschlussstutzen (14) zum Befüllen und Entleeren der Drucktanks sowie zum Einleiten von Reinigungsmitteln (16) am hinteren Fahrzeugende, insbesondere in einem Schrank, vorgesehenen sind und/oder die Drucktanks (12) an der Tankoberseite im Tankinnenraum (17) Lanzen (18) mit Sprühköpfen (19) zum Einleiten und Verteilen von Reinigungsmitteln aufweisen.

## Claims

1. Transport vehicle, particularly for the brewery industry, with a vehicle frame (1) and a storage area (7), said vehicle frame (1) comprising at least two axles (2) and a chassis (10), with a loading floor (8) being mounted at the vehicle frame (1) and at least one closed, tubular tank for transportation being supported at the vehicle frame (1) within the storage area (7), whereat the tank extends nearly beyond the whole length of the vehicle and lifting means are provided for alternatively lifting or lowering of the tank, under which the loading floor (8) is arranged, **characterized in that** two cylindrical pressure tanks as tanks for transportation are supported side by side at the vehicle frame (1), with the pressure tanks arranged in a base frame (11) liftable or alternatively lowerable with the tanks by means of the lifting means.

2. Transport vehicle according to claim 1, **characterized in that** the base frame (11) is removable mounted at the vehicle frame (1).

3. Transport vehicle according to claim 1 or 2, **characterized in that** above the tanks a loading area (20) is formed, which is supported at the base frame (11).

4. Transport vehicle according to any of the claims 1 to 3, **characterized in that** the base frame (11) or attachments of the tank comprise rectangular-shaped pockets (22) for engagement by fork lift arms.

5. Transport vehicle according to any of the claims 1 to 4, **characterized in that** the base frame (11) has support legs pivotable or extensible mounted and/or cut-outs (25) for mounting of support legs (13).

6. Transport vehicle according to any of the claims 1 to 5, **characterized in that** the lifting means have at least one motor (21) driven pulling means or a worm drive.

7. Transport vehicle according to any of the claims 1 to 6, **characterized in that** the lifting means are driven by a hydraulical or pneumatical drive, with the drive unit for the hydraulical or pneumatical drive being preferable attached to the power engine of the traction engine.

8. Transport vehicle according to any of the claims 1 to 7, **characterized in that** the vehicle frame (1) is lowered compared to conventional vehicles and/or that wheels with smaller diameter are mounted at the axles.

9. Transport vehicle according to any of the claims 1 to 8, **characterized in that** the pressure tanks for transportation are adapted for the transport of beer, carbonated fluids or other beverages and the loading floor (8) or respectively the loading area (20) are adapted for the transportation of palleted goods.

10. Transport vehicle according to claim 9, **characterized in that** a connection piece (14) for filling and emptying the pressure tanks as well as for introducing a detergent (16) is provided at the rear of the vehicle, preferable in a locker, and/or the pressure tanks (12) comprise at the top side of the inner space (17) of the tanks lances (18) with spray nozzle heads (19) to induce and to distribute the detergent.

## Revendications

1. Véhicule de transport pour l'industrie de la bière, des brasseries et des boissons, comprenant un châssis de roulement (10) qui comporte au moins deux essieux (2) et un cadre de véhicule (1), ainsi qu'un espace de chargement (7), dans lequel :
- un fond de chargement (8) est monté sur le cadre de véhicule (1) ; et
- au moins une cuve de transport de forme tubulaire, s'étendant sur presque toute la longueur du véhicule, s'appuie sur le cadre de véhicule (1) à l'intérieur de l'espace de chargement (7), laquelle peut être élevée ou abaissée au choix au moyen d'un dispositif de levage et en dessous de laquelle est réalisé le fond de chargement (8) ;
**caractérisé en ce que** deux cuves sous pression (12) disposées l'une à côté de l'autre et essentiellement en forme de cylindre droit s'appuient sur le cadre de véhicule (1) comme cuves de transport, lesquelles sont agencées dans un support de cadre (11) pouvant être élevé ou abaissé au choix avec les cuves sous pression au moyen du dispositif de levage.

2. Véhicule de transport selon la revendication 1, **caractérisé en ce que** le support de cadre (11) est fixé de manière démontable sur le cadre de véhicule (1).

3. Véhicule de transport selon l'une ou l'autre des revendications 1 et 2, **caractérisé en ce qu'**une surface de chargement (20) qui s'appuie sur le support de cadre (11), est réalisée au-dessus des cuves de transport.

4. Véhicule de transport selon l'une des revendications 1 à 3, **caractérisé en ce que** le support de cadre (11) ou des pièces rajoutées sur la cuve présentent des poches (22) essentiellement rectangulaires pour l'engagement des bras d'un chariot élévateur.

5. Véhicule de transport selon l'une des revendications 1 à 4, **caractérisé en ce que** le support de cadre présente des pieds d'appui pliables ou déployables et/ou des évidements (25) pour réceptionner des pieds d'appui (13).

6. Véhicule de transport selon l'une des revendications 1 à 5, **caractérisé en ce que** le dispositif de levage présente au moins un moyen de traction pouvant être actionné à l'aide d'un moteur (21) ou un entraînement à broche.

7. Véhicule de transport selon l'une des revendications 1 à 6, **caractérisé en ce que** le dispositif de levage peut être actionné au moyen d'un entraînement hydraulique ou pneumatique, l'unité d'entraînement pour l'entraînement hydraulique ou pneumatique étant de préférence un groupe auxiliaire sur la machine de traction.

8. Véhicule de transport selon l'une des revendications 1 à 7, **caractérisé en ce que** le châssis de roulement (1) est placé plus bas en comparaison aux véhicules usuels et/ou **en ce que** des pneus avec un diamètre plus petit sont montés sur les essieux.

9. Véhicule de transport selon l'une des revendications 1 à 8, **caractérisé en ce que** les cuves de transport sous pression conviennent au transport de la bIère, des liquides contenant du gaz carbonique ou d'autres boissons et **en ce que** le fond de chargement (8) ou la surface de chargement (20) convient au transport de marchandises sur palettes.

10. Véhicule de transport selon la revendication 9, **caractérisé en ce qu'**une tubulure de raccordement (14) est prévue sur l'extrémité arrière du véhicule, en particulier dans une armoire, pour remplir et vider les cuves sous pression ainsi que pour introduire des produits de nettoyage (16) et/ou **en ce que** les cuves sous pression (12) présentent sur la face supérieure de la cuve dans l'espace intérieur (17) de la cuve des lances (18) comportant des têtes de pulvérisation (19) pour introduire et distribuer des produits de nettoyage.
